## Europäisches Patentamt

## European Patent Office

## Office européen des brevets

(11) Veröffentlichungsnummer: **0 144 886**
**B1**

# (12) EUROPÄISCHE PATENTSCHRIFT

(45) Veröffentlichungstag der Patentschrift:
**03.02.88**

(21) Anmeldenummer: **84114269.8**

(22) Anmeldetag: **26.11.84**

(51) Int. Cl.⁴: **B 61 B 12/02**

(54) Positioniervorrichtung für die Fahrzeuge einer Elektrohängebahn.

(30) Priorität: **13.12.83 DE 3345039**

(43) Veröffentlichungstag der Anmeldung:
**19.06.85 Patentblatt 85/25**

(45) Bekanntmachung des Hinweises auf die Patenterteilung:
**03.02.88 Patentblatt 88/5**

(84) Benannte Vertragsstaaten:
**AT BE CH FR GB IT LI NL SE**

(56) Entgegenhaltungen:
**EP-A-0 070 410**
**US-A-3 085 659**
**US-A-3 395 651**
**US-A-3 648 619**

(73) Patentinhaber: **Uttscheid, Georg, Rosenheimer
Strasse 117, D-8208 Kolbermoor (DE)**

(72) Erfinder: **Uttscheid, Georg, Rosenheimer Strasse
117, D-8208 Kolbermoor (DE)**

(74) Vertreter: **Wächtershäuser, Günter, Dr., Tal 29,
D-8000 München 2 (DE)**

## Beschreibung

Die Erfindung betrifft eine Positioniervorrichtung gemäß dem Oberbegriff des Anspruchs 1. Herkömmliche Positioniervorrichtungen dieser Art sind mit einer Reihe von Problemen behaftet. Der Antriebsmotor des Fahrzeugs wird bereits vor Erreichen der Halteposition ausgeschaltet, so daß das Fahrzeug die Halteposition vermöge seiner Schwungmasse erreichen muß. Nun sind aber die Lasten des Gehänges äußerst unterschiedlich. Sie können bis zu 5 Tonnen erreichen. Daher kann man die Positioniervorrichtung nicht optimal einstellen. wenn die Justierung so erfolgt, daß das Fahrzeug mit der größten Last seine Endstellung gerade noch erreicht, so gleiben andere Fahrzeuge vor dem Erreichen dieser Endstellung stehen. Wenn man andererseits sicherstellt, daß auch Fahrzeuge mit geringer Last die Endstellung erreichen, so kommt es bei Fahrzeugen mit großer Last zu erheblichen Stoßbeanspruchungen. Hierdurch wird insbesondere auch das zu transportierende Produkt, z. B. eine Fahrzeugkarosserie beansprucht.

Es ist somit Aufgabe der vorliegenden Erfindung, eine Positioniervorrichtung für eine Elektrohängebahn zu schaffen, bei der die Fahrzeuge unabhängig von ihrer Masse eine wohldefinierte, präzise Endstellung erreichen, ohne daß es zu Stoßbeanspruchungen und Rückprallerscheinungen kommt.

Diese Aufgabe wird erfindungsgemäß durch den kennzeichnenden Teil des Anspruchs 1 gelöst. Durch diese Maßnahmen kann die Aufgabe der kinetischen Energie des Fahrzeugs durch die Dämpfungsvorrichtung über eine längere Wegstrecke verteilt werden, so daß unzulässige Stoßbeanspruchungen vermieden werden.

Weitere vorteilhafte Ausbildungen sind in den abhängige Ansprüchen gekennzeichnet. Das Fahrzeug erreicht die definierte Endposition entweder mit Hilfe des Elektromotors, welcher eingeschaltet bleibt, bis die Endposition erreicht wird. Dabei ist ein Ausgleichsantriebsrad von besonderem Vorteil. Alternativ kann die Endposition auch dadurch erreicht werden, daß die Dämpfungsvorrichtung zusätzlich die Funktion einer Antriebsvorrichtung übernimmt und den Wagen vermittels einer am Schlitten angelenkten Mitnehmerklinke in die definierte Endposition fährt. Die Rückbewegung des Schlittens in die Ausgangslage kann ebenfalls durch die Dämpfungseinrichtung bewirkt werden.

Im folgenden wird die Erfindung anhand von Zeichnungen näher erläutert. Es zeigen

Fig. 1 eine schematische Darstellung einer bevorzugten Ausführungsform der erfindungsgemäßen Positioniereinrichtung zu Beginn ihrer Funktion;

Fig. 2 die Positioniervorrichtung nach Anspruch 1 in der Halteposition und

Fig. 3 die Positioniereinrichtung der Fig. 1 nach Rückkehr in die Ausgangsposition.

Im folgenden soll zunächst der Aufbau einer bevorzugten Ausführungsform der Positioniervorrichtung erläutert werden. Der zu positionierende Wagen ist nicht dargestellt. Es ist lediglich ein mit dem Wagen verbundener Anschlagstift 10 gezeigt, der sich bei der Bewegung des Wagens in Richtung des Pfeils A bewegt. Es kommt jede beliebige Elektrohängebahn in Frage, bei der das Problem besteht, die Wagen intermediär in präzisen Haltepositionen zu stoppen und dann weiterfahren zu lassen. Vorzugsweise handelt es sich um eine Elektrohängebahn, bei der jeder Wagen einen Antriebsmotor trägt, dessen Antriebskraft auf ein Laufrad wirkt, das auf einer Schiene der Hängebahn abrollt. Gegebenenfalls kann zusätzlich auch ein Antriebsritzel für Gefällstrecken und Steigungsstrecken vorhanden sein. Besonders bevorzugt ist eine Elektrohängebahn, bei der das Laufrad gemäß der deutschen Patentanmeldung P 31 28 824.3 (& EP-A-0 070 410) auf die zu Offenbarungszwecken ausdrücklich Bezug genommen wird, in eine innere Laufradscheibe und einen äußeren Laufradring mit einem dazwischenliegenden Ring aus Kunststoff oder Lagerwerkstoff zur kraftschlüssigen Übertragung der Antriebskraft aufgebaut ist. Auf die Vorteile eines solchen Laufrades in Verbindung mit vorliegender Erfindung wird weiter unten noch im einzelnen hingewiesen werden.

Die Positioniereinrichtung umfaßt einen Schlitten 20, welcher in Richtung des Pfeils A, d.h. in Richtung der Bewegung der Wagen der Hängebahn verschiebbar ist. Hierzu ist der Schlitten 20 an stationären Führungsstangen 22 mit Hilfe von nicht dargestellten Gleitlagern in üblicher Weise gelagert. Die Länge der Führungsstangen 22 und somit auch die Länge der Verschiebungsbewegung des Schlittens 20 kann je nach den Bedingungen der Elektrohängebahn frei gewählt werden. Ein pneumatischer oder hydraulischer Dämpfungszylinder 24 ist bei 26 an einem stationären Bauteil angelenkt. Er umfaßt eine am Schlitten 20 angelenkte Kolbenstange 28. Die Dämpfungswirkung des Zylinders 24 ist mit Hilfe eines nicht dargestellten Drosselventils einstellbar. Der Dämpfungszylinder kann je nach der gewünschten Länge der Verschiebebewegung des Schlittens 20 beliebig lang gestaltet werden, so daß auch der Dämpfungsvorgang sich auch über einen beliebig langen Weg erstrecken kann. Die Steuerung des Dämpfungszylinders kann auch so ausgebildet sein, daß im Verlauf dieser Verschiebebewegung von der Ausgangsposition des Schlittens in dessen Endposition, in der der Wagen zur Ruhe kommt, die Dämpfungscharakteristik sich stufenweise ändert, und zwar durch die sukzessive Betätigung von Drosselventilen. Es kann auch eine stufenlose Änderung vorgesehen sein. Die Bedeutung einer solchen Maßnahme wird weiter unten näher erläutert.

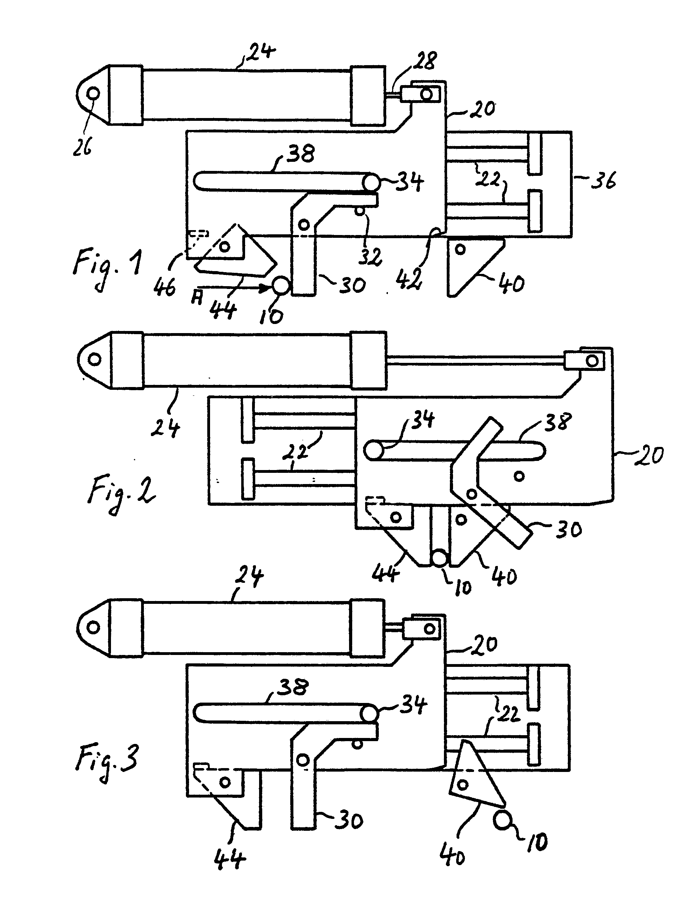

Am Schlitten 20 ist ein Mitnahmeglied 30 angelenkt. Dieses ist als knieförmiger Doppelhebelausgebildet. Er wird durch einen am Schlitten befestigten Anschlagstift 32 daran gehindert, sich vermöge der Schwerkraft im Uhrzeigersinn aus der in Fig. 1 gezeigten Position heraus zu drehen. In der in Fig. 1 dargestellten Ausgangsposition des Schlittens 20 wird außerdem eine Drehung des Mitnahmegliedes 30 im Gegenuhrzeigersinn durch ein Sperrglied 34 gehindert. Dieses ist als stationärer Stift ausgebildet, welcher sich von einem stationären Bauteil 36 der Positioniereinrichtung durch einen Längsschlitz 38 des Schlittens 20 erstreckt. Dieser Längsschlitz 38 definiert zugleich in Zusammenwirken mit dem Sperrglied 34 die Länge der Verschiebebewegung des Schlittens 20. In den Figuren 1, 2 und 3 sind somit jeweils die Endlagen des Schlittens dargestellt. In der in Fig. 1 gezeigten Position ist das Mitnahmeglied 30 starr verriegelt. Dieser Verriegelungszustand bleibt solange aufrechterhalten wie das Sperrglied 34 am oberen Arm des Mitnahmegliedes 30 angreift. In der in Fig. 2 gezeigten Position ist dies nicht mehr der Fall, so daß hier das Mitnahmeglied 30 funktionslos und frei im Gegenuhrzeigersinn verschwenkbar ist, angedeutet durch die in Fig. 2 gezeigte Schräglage. Der untere Arm des Mitnahmegliedes 30 wirkt in der in Fig. 1 gezeigten Position als Anschlag für den Stift 10 des Wagens.

Die Halteposition des Wagens ist durch ein Anschlagglied 40 definiert, das an einem stationären Bauteil angelenkt ist, jedoch derart, daß seine Anlenkposition in Richtung der Wagenbewegung justierbar ist. In dem in Fig. 1 gezeigten Zustand ist das Anschlagglied 40 nicht verriegelt. Sobald jedoch der Schlitten 20 in Richtung des Pfeils A nach rechts bewegt wird, läuft seine untere, leicht angeschrägte Fläche 42 auf das Anschlagglied 40 auf, und dieses wird hierdurch verriegelt. Dieser Zustand ist in Fig. 2 gezeigt. Voraussetzung hierfür ist jedoch im Rahmen der dargestellten Ausführungsform, daß der Schlitten 20 und das Anschlagglied 40 mindestens teilweise in der gleichen Ebene liegen. Ferner ist am Schlitten 20 eine Mitnehmerklinke 44 angelenkt, welche normalerweise unter ihrem Eigengewicht in der in Fig. 3 gezeigten Position an einem Vorsprung 46 des Schlittens 20 ruht. Die Mitnehmerklinke ist daher aus dieser Position im Gegenuhrzeigersinn verschwenkbar. Eine solche Schwenkposition ist in Fig. 1 gezeigt. Die Schwenkbewegung wird durch den sich in Richtung des Pfeils A bewegenden Stift 10 des Wagens hervorgerufen.

Im folgenden soll die Arbeitsweise dieser Positioniervorrichtung erläutert werden, und zwar anhand verschiedener Betriebsweisen. Diese verschiedenen Betriebsweisen unterscheiden sich unter anderem auch dadurch, daß der Dämpfungszylinder 24 und dessen Steuerung unterschiedlich ausgebildet sind.

Bei einer ersten Betriebsweise fährt der Wagen vermöge seines eigenen Motorantriebs bis in die durch das Anschlagglied 40 definierte Endposition: Der Zylinder 24 dient daher ausschließlich als Dämpfungszylinder. Der Wagen fährt zusammen mit dem Gehänge mit einer Geschwindigkeit von etwa 20 m/min. Er muß in der durch das Anschlagglied 40 definierten Position präzise zum Stillstand kommen. Die gewünschte Position wird zuvor durch Justierung des Anschlaggliedes 40 eingestellt. Ebenso wird die Dämpfungswirkung des Zylinders 24 zuvor durch ein Drosselventil eingestellt. Der Stift 10 des Wagens stößt an der Mitnehmerklinke 44 an und diese weicht im Gegenuhrzeigersinn aus. Danach gelangt der Stift 10 in Angriff an dem Mitnahmeglied 30. Da dieses durch den Stift 34 verriegelt ist, kann es nicht durch eine Schwenkbewegung ausweichen. Daher wird nun vom Elektromotor des Wagens nicht nur dieser und das Gehänge, sondern auch der Schlitten 20 bewegt. Dem wirkt jedoch der Dämpfungszylinder 24 entgegen, d.h. die Geschwindigkeit, mit der der Wagen durch den Elektromotor vorwärts bewegt werden kann, wird nun durch die Einstellung des nicht gezeigten Drosselventils des Zylinders 24 bestimmt. Der Wagen fährt mitsamt dem Gehänge daher mit verminderter Geschwindigkeit, z. B. mit 5 m/min. weiter, bis der Stift 10 am Anschlagglied 40 anstößt. Da die Schwungmasse bereits durch die Wirkung des Dämpfungszylinders 24 herabgesetzt ist, bleibt der Wagen präzise in der gewünschten Endposition stehen. Er federt nicht zurück. Andererseits kommt er auch nicht in einer früheren Position zur Ruhe, da der Motorantrieb bis zum Erreichen der Endlage eingeschaltet bleibt. Es ist bei dieser Betriebsweise erwünscht, das Zusammenwirken zwischen dem Mitnahmeglied 30 und dem Sperrglied 34 derart zu gestalten, daß seine Freigabe erst kurz vor der Stopposition erfolgt. Bei schwerem Gehänge bedarf eines längeren Dämpfungsweges, um die Geschwindigkeit des Fahrzeugs herabzusetzen. Bei der beschriebenen Ausführungsform bereitet dies jedoch keine Schwierigkeiten, da der Verschiebeweg des Schlittens 20 und der Dämpfungsweg des Zylinders 24 beliebig lang gestaltet werden können. Bei einer abgewandelten Ausführungsform kann das Drosselventil derart ausgebildet sein, daß es durch Wegesteuerung des Schlittens 20 stufenweise oder auch stufenlos während der Bewegung des Schlittens in die Halteposition vom vollen Öffnungszustand in den Schließzustand bewegt wird, so daß die Dämpfungswirkung sukzessive oder allmählich verstärkt wird. Bei einer stufenweisen Veränderung der Dämpfungswirkung kann die Fahrzeuggeschwindigkeit z. B. von 20 m/min. auf zunächst 10 m/min. gesenkt werden, gefolgt von einer weiteren Absenkstufe auf 5 m/min.

Sobald der Wagen seine Halteposition erreicht hat, wird der Motor abgeschaltet. Danach können die notwendigen Arbeiten am Gehänge in der präzisen Halteposition ausgeführt werden. Sobald das Gehänge weiter bewegt werden soll, wird zunächst der Schlitten 20 entgegen der Pfeillinie A zurückbewegt. Hierzu kann der Dämpfungszylinder 24 verwendet werden. Es bedarf hierzu lediglich einer Steuerungseinrichtung, welche es gestattet, den Zylinder 24 mit Druckluft zu beaufschlagen. Während der Rücklaufbewegung des Schlittens 20 wird das Mitnahmeglied 30 wieder durch den Stift 34 verriegelt und andererseits wird das Anschlagglied 40 entriegelt. Nun kann der Motor des Hängefahrzeugs wieder eingeschaltet werden. Die Fahrt des Wagens wird nun nämlich nicht mehr durch das Anschlagglied 40 behindert, da dieses gemäß Fig. 3 durch den Stift 10 in Gegenuhrzeigerrichtung verschwenkt wird.

Bei dieser Betriebsweise ist insbesondere die Verwendung eines Ausgleichslaufrades gemäß der obengenannten deutschen Patentanmeldung P 31 28 824.3 (& EP-A-0 070 410) von Vorteil, das dieses den Unterschied auszugleichen vermag zwischen der durch den Dämpfungszylinder vorgegebenen Bewegungsgeschwindigkeit des Wagens und der nach wie vor hohen und gleichbleibenden Antriebsgeschwindigkeit des Elektromotors des Wagens. Desgleichen ist das Ausgleichslaufrad auch beim Wiederanfahren, insbesondere bei sschweren Gehängelasten, von Vorteil, da durch dieses ein ruckweises Wiederanfahren vermieden wird. Im übrigen ist die Verwendung eines solchen Ausgleichslaufrades auch bei der nun zu beschreibenden weiteren Betriebsweise von Vorteil. Hierbei wird der Elektromotor bereits abgeschaltet, ehe der Wagen die durch das Anschlagglied 40 definierte Halteposition erreicht. Nach dem Abschalten des Elektromotors wird die Bewegung des Wagens zunächst noch durch die Schwungmasse aufrechterhalten und danach durch eine Betätigung des Dämpfungszylinders durch Beaufschlagung mit Druckmedium bewirkt: Zunächst stößt der Stift 10 wiederum an der Mitnehmerklinke 44 an, und diese weicht durch Schwenkbewegung im Gegenuhrzeigersinn aus. Danach fällt die Mitnehmerklinke 44 wieder hinter dem Stift 10 in die in Fig. 3 gezeigte Position zurück. Der Elektromotor kann bereits vorher ausgeschaltet worden sein oder er kann nun erst ausgeschaltet werden. Je nach dem Gewicht des Gehänges hat der Wagen eine erhebliche Schwungmasse. Vermöge dieser Schwungmasse wird daher der Schlitten 20 durch Angriff des Stiftes am Mitnehmeglied 30 in Richtung des Pfeiles A bewegt, und zwar gegen die Kraft des Dämpfungszylinders 24. Hierdurch wird die Bewegung des Wagens mit Gehänge abgebremst. In manchen Fällen reicht die Schwungmasse aus, um den Wagen mitsamt dem Schlitten 20 in die durch das Anschlagglied 40 definierte Halteposition zu bringen. Bei geringerer Last reicht die Schwungmasse hierzu jedoch nicht aus. Daher erhält der Dämpfungszylinder 24 zusätzlich die Funktion eines Betätigungszylinders. Durch Beaufschlagung des Dämpfungszylinders 24 mit Druckmedium kann somit der Schlitten 20 weiter nach rechts bewegt werden. Nun tritt die Mitnehmerklinke 44 in Funktion. Sie greift am Stift 10 des Wagens an und bringt diesen in die in Fig. 2 gezeigte eindeutig definierte Halteposition. Die sich daran anschließenden Vorgänge entsprechen der ersten Betriebsweise.

Die Mitnehmerklinke 44 hat außer der Funktion als Mitnehmer auch noch die Funktion, ein Zurückfedern des Wagens zu verhindern, und zwar bei allen Betriebsweisen. Es sind zahlreiche Abwandlungen der erfindungsgemäßen Vorrichtung denkbar. Insbesondere ist das Anschlagglied 40 anstelle der Verriegelung durch den Schlitten 20 durch ein gesondert betätigbares Verriegelungselement festlegbar. Das Anschlagglied 40 kann natürlich auch verschiebbar gelagert sein oder um eine andere Achse verschwenkbar. Das gleiche gilt für das Mitnahmeglied 30 und für die Mitnehmerklinke 44. Die dargestellte Ausführungsform ist jedoch besonders einfach aufgebaut, da der Dämpfungszylinder drei Funktionen übernehmen kann und da die Schlittenbewegung automatisch zur Verriegelung und Entriegelung des Anschlaggliedes 40 sowie des Mitnehmergliedes 30 führt.

**Patentansprüche**

1. Positioniervorrichtung für einen Wagen einer Elektrohängebahn mit einem die Halteposition des Wagens definierenden Anschlagglied (40), das zur Weiterfahrt des Wagens außer Funktion setzbar ist und mit einer Dämpfungseinrichtung (24) zur Aufnahme des Wagenschwungs, gekennzeichnet durch einen in Bewegungsrichtung des Wagens (10) verschiebbaren und mit der Dämpfungseinrichtung (24) verbundenen Schlitten (20) mit einem mit dem Wagen (10) zusammenwirkenden Mitnahmeglied (30), das gegen Ende der Schlittenbewegung außer Funktion kommt.

2. Positioniervorrichtung nach Anspruch 1, dadurch gekennzeichnet, daß die Dämpfungseinrichtung (24) ein pneumatischer oder hydraulischer Zylinder ist.

3. Positioniervorrichtung nach einem der Ansprüche 1 oder 2, dadurch gekennzeichnet, daß die Dämpfungseinrichtung ein einstellbares Drosselventil aufweist.

4. Positioniervorrichtung nach einem der Ansprüche 1 bis 3, dadurch gekennzeichnet, daß die Dämpfungseinrichtung (24) eine im Verlauf der Schlittenbewegung abgestuft oder stufenlos sich ändernde Dämpfungscharakteristik aufweist.

5. Positioniervorrichtung nach einem der Ansprüche 1 bis 4, dadurch gekennzeichnet, daß das Mitnahmeglied (30) durch ein über mindestens eine Teilstrecke der Schlittenbewegung wirkendes stationäres Sperrglied (34) in Funktion gehalten ist.

6. Positioniervorrichtung nach Anspruch 5, dadurch gekennzeichnet, daß das Mitnahmeglied (30) als am Schlitten (20) angelenkter Doppelkniehebel ausgebildet ist und das Sperrglied (34) als ein an einem der Hebel des Mitnahmegliedes (30) angreifender, stationärer Stift ausgebildet ist.

7. Positioniervorrichtung nach einem der Ansprüche 1 bis 6, dadurch gekennzeichnet, daß das Anschlagglied (40) durch den sich in die Halteposition bewegenden Schlitten (20) verriegelbar ist.

8. Positioniervorrichtung nach einem der Ansprüche 2 bis 7, dadurch gekennzeichnet, daß der Schlitten durch eine Umsteuerung des Zylinders der Dämpfungseinrichtung (24) zurückfahrbar ist.

9. Positioniervorrichtung nach einem der Ansprüche 2 bis 8, dadurch gekennzeichnet, daß der Schlitten (20) in Vorwärtsrichtung bis zur Halteposition bewegbar ist unter Mitnahme des Wagens (10) vermittels einer an diesem angreifenden Mitnehmerklinke (44).

## Claims

1. Positioning device for a trolley of an electric overhead trolley conveyor with a stopping member (40) which defines the stopping position of the trolley and which may be rendered inoperative for the recommencement of the movement of the trolley and with a damping device (24) for the reduction of the mass force of the trolley, characterized by a carrier (20) which is shiftable in the direction of the movement of the trolley (10) and which is connected with the damping device (24) and which has an engaging member (30) cooperating with the trolley (10), which member becomes inoperative toward the end of the movement of the carrier.

2. Positioning device according to claim 1 characterized in that the damping device (24) is a pneumatic or hydraulic cylinder.

3. Positioning device according to one of claims 1 and 2, characterized in that the damping device has an adjustable throttle valve.

4. Positioning device according to one of claims 1 to 3, characterized in that the damping device (24) has a damping characteristic which changes step-wise or step-less in the course of the carrier movement.

5. Positioning device according to one of claims 1 to 4, characterized in that the engaging member (30) is maitained operative by means of a stationary locking member (34) which is operative over at least a partial distance of the carrier movement.

6. Positioning device according to claim 5, characterized in that the engaging member (30) is a double-armed elbow lever pivotably connected to the carrier (20) and that the locking member (34) is a stationary pin, which engages one of the arms of the engaging member (30).

7. Positioning device according to one of claims 1 to 6, characterized in that the stopping member (40) is lockable by the carrier (20) moving into the stopping position.

8. Positioning device according to one of claims 2 to 7, characterized in that the carrier is returnable by a control of the cylinder of the damping device (24).

9. Positioning device according to one of claims 2 to 8, characterized in that the carrier (20) may be driven forward into the end position whereby it pushes the carrier (10) by means of an engaging pawl (44) engaging the carrier.

## Revendications

1. Dispositif de positionnement pour un véhicule d'un convoyeur aérien électrique, comprenant un organe de butée (40) servant à définir la position d'arrêt du véhicule et qui peut être mis hors d'action pour laisser le véhicule poursuivre son trajet et un dispositif d'amortissement (24) destiné à absorber la force d'inertie du véhicule, caractérisé par un chariot (20) mobile en translation axiale dans la direction du déplacement du véhicule (10) et relié au dispositif d'amortissement (24), ce chariot étant muni d'un organe d'entraînement (30) qui coopère avec le véhicule (10) et qui est mis hors d'action vers la fin du mouvement du chariot.

2. Dispositif de positionnement selon la revendication 1, caractérisé en ce que le dispositif d'amortissement (24) est un cylindre pneumatique ou hydraulique.

3. Dispositif de positionnement selon l'une des revendications 1 et 2, caractérisé en ce que le dispositif d'amortissement présente une valve d'étranglement réglable.

4. Dispositif de positionnement selon l'une des revendications 1 à 3, caractérisé en ce que le dispositif d'amortissement (24) présente une caractéristique d'amortissement qui varie par paliers ou en continu au cours du mouvement du chariot.

5. Dispositif de positionnement selon l'une des revendications 1 à 4, caractérisé en ce que l'organe d'entraînement (30) est maintenu en action par un organe de verrouillage (34) fixe et qui agit pendant au moins une partie de la course du mouvement du chariot.

6. Dispositif de positionnement selon la revendication 5, caractérisé en ce que l'organe d'entraînement (30) est constitué par un levier coudé à deux bras articulé sur le chariot (20) et en ce que l'organe de verrouillage (34) est constitué par un doigt fixe qui attaque l'un des bras de levier de l'organe d'entraînement (30).

7. Dispositif de positionnement selon l'une des revendications 1 à 6, caractérisé en ce que l'organe de butée (40) peut être verrouillé par le chariot (20) lorsque ce dernier vient prendre sa position d'arrêt.

8. Dispositif de positionnement selon l'une des revendications 2 à 7, caractérisé en ce que le chariot peut être ramené en arrière par l'inversion de la commande du cylindre du dispositif d'amortissement (24).

9. Dispositif de positionnement selon l'une des revendications 2 à 8, caractérisé en ce que le chariot (20) peut être mis en mouvement vers l'avant jusqu'à la position d'arrêt, en entraînant le véhicule (10) au moyen d'un cliquet d'entraînement (44) qui attaque ce véhicule.

Fig. 1

Fig. 2

Fig. 3